(19) **Europäisches Patentamt / European Patent Office / Office européen des brevets**

(11) **EP 4 317 205 A1**

(12) **EUROPEAN PATENT APPLICATION**
published in accordance with Art. 153(4) EPC

(43) Date of publication:
**07.02.2024 Bulletin 2024/06**

(21) Application number: **22815847.3**

(22) Date of filing: **17.05.2022**

(51) International Patent Classification (IPC):
**C08F 8/12** *(2006.01)*     **C08F 16/06** *(2006.01)*
**C08K 5/092** *(2006.01)*     **C08L 29/04** *(2006.01)*

(52) Cooperative Patent Classification (CPC):
**C08F 8/12; C08F 16/06; C08K 5/092; C08L 29/04**

(86) International application number:
**PCT/JP2022/020586**

(87) International publication number:
**WO 2022/255095 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2021  JP 2021091868**

(71) Applicant: **Denka Company Limited**
**Tokyo 103-8338 (JP)**

(72) Inventors:
- HIGASHIHARAGUCHI,Seiya
  **Tokyo 103-8338 (JP)**
- WATANABE,Kosuke
  **Tokyo 103-8338 (JP)**

(74) Representative: **Mewburn Ellis LLP**
**Aurora Building**
**Counterslip**
**Bristol BS1 6BX (GB)**

(54) **POLYVINYL ALCOHOL-BASED POLYMER COMPOSITION AND BINDER FOR GLASS PAPER**

(57)     A polyvinyl alcohol-based polymer composition with improved yellowing resistance is provided. A polyvinyl alcohol-based polymer composition includes a polyvinyl alcohol-based polymer and citric acid.

EP 4 317 205 A1

**Description**

**FIELD OF THE INVENTION**

The present invention relates to a polyvinyl alcohol-based polymer composition. The present invention also relates to a binder for glass paper containing the composition.

**BACKGROUND OF THE INVENTION**

Polyvinyl alcohol-based polymers are suitably used for adhesives, binders, and the like because of their excellent adhesive properties. Binders for glass paper are one of them, and polyvinyl alcohol polymers are used.

The polyvinyl alcohol-based polymer used as a binder for glass paper is used in the form of a slurry dispersed in water or an aqueous solution dissolved in water. Therefore, the glass paper is manufactured by heating and drying it. At this time, the polyvinyl alcohol-based polymer may turn yellow due to heating, which poses a problem.

Patent Literature 1 and 2 disclose polyvinyl alcohol-based polymers used as binders for glass paper.

**PRIOR ART**

Patent Literature

[Patent Literature 1] US Patent Application Publication No. 2017/0044407

[Patent Literature 2] WO 2019/012581

**SUMMARY OF THE INVENTION**

However, the polyvinyl alcohol-based polymers described in Patent Literatures 1 and 2 do not have sufficient yellowing resistance. Therefore, one object of the present invention is to provide a polyvinyl alcohol-based polymer composition with improved yellowing resistance. In addition, another object of the present invention is to provide a binder for glass paper containing such a polyvinyl alcohol-based polymer composition.

According to one embodiment of the present invention, a polyvinyl alcohol-based polymer composition having improved yellowing resistance is provided by adding citric acid to the polyvinyl alcohol-based polymer.

According to one embodiment of the present invention, a polyvinyl alcohol-based polymer composition with improved yellowing resistance can be provided. In addition, by using such a polyvinyl alcohol-based polymer composition, an excellent binder for glass paper is provided.

**DETAILED DESCRIPTION OF THE INVENTION**

Hereinafter, Embodiments of the present invention will be described in detail. It should be noted that the present invention is not limited to the embodiments as described below.

In one embodiment, it is essential for the polyvinyl alcohol-based polymer composition according to the present invention to comprise a polyvinyl alcohol-based polymer and citric acid. The higher the amount of citric acid is, the easier it is to exhibit the effect of improving yellowing resistance. Therefore, the lower limit of the amount of the citric acid in the polyvinyl alcohol-based polymer composition is preferably 0.01 parts by mass or more, more preferably 0.1 parts by mass or more, and even more preferably 0.5 parts by mass or more, with respect to 100 parts by mass of the polyvinyl alcohol-based polymer. However, from the viewpoint of ensuring adhesive performance when used as a binder for glass paper, it is desirable that the amount of citric acid be small. Accordingly, the upper limit of the amount of the citric acid in the polyvinyl alcohol-based polymer composition is preferably 10 parts by mass or less, more preferably 5.0 parts by mass or less, and even more preferably 3.0 parts by mass or less, with respect to 100 parts by mass of the polyvinyl alcohol-based polymer. Therefore, the range of the amount of the citric acid in the polyvinyl alcohol-based polymer composition is, for example, preferably 0.01 to 10 parts by mass, more preferably 0.1 to 5.0 parts by mass, and even more preferably 0.5 to 3.0 parts by mass, with respect to 100 parts by mass of the polyvinyl alcohol-based polymer.

The polyvinyl alcohol-based polymer in the present invention is one prepared by saponifying all or part of the polyvinyl ester obtained by polymerizing vinyl esters, and commercially available polyvinyl alcohol may be used.

Polyvinyl esters may be homopolymers of single or multiple vinyl esters, and may be a copolymer of a vinyl ester and a monomer other than the vinyl ester that can be copolymerized with the vinyl ester. From the viewpoint of the adhesive performance of polyvinyl alcohol-based polymers, homopolymers of vinyl esters are preferred.

Vinyl esters may be, for example, vinyl acetate, vinyl propionate, vinyl valerate, vinyl caprate, vinyl laurate, vinyl stearate, vinyl benzoate, vinyl pivalate, and the like. From the viewpoint of ease of polymerization, vinyl acetate is preferred. One type of vinyl ester may be used alone, or two or more types may be used in combination.

Monomers other than vinyl esters that can be copolymerized with vinyl esters include, for example, α-olefin monomers such as ethylene and propylene; (meth)acrylic acid alkyl ester monomers such as methyl (meth)acrylate, ethyl (meth)acrylate, butyl (meth)acrylate, and 2-ethylhexyl (meth)acrylate; unsaturated amide monomers such as (meth)acrylamide, N-methylolacrylamide; unsaturated carboxylic acid monomers such as (meth) acrylic acid, crotonic acid, maleic acid, itaconic acid, fumaric acid; alkyl (methyl, ethyl, propyl, and the like) ester monomers of unsaturated carboxylic acids; anhydrides of unsaturated carboxylic acids such as maleic anhydride; salts of unsaturated carboxylic acids with sodium, potassium, ammonium, and the like; glycidyl group-containing monomers such as allyl glycidyl ether and glycidyl (meth)acrylate; a sulfonic acid group-containing monomer such as 2-acrylamido-2-methylpropanesulfonic acid or a salt thereof; phosphate group-containing monomers such as acid phosphooxyethyl methacrylate and acid phosphooxypropyl methacrylate; alkyl vinyl ether monomers, and the like, but are not limited thereto. Monomers other than vinyl esters that can be copolymerized with vinyl esters may be used alone or in combination of two or more.

A polymerization initiator may be used when polymerizing vinyl esters. The polymerization initiator may be, for example, a radical polymerization initiator. The radical polymerization initiator may be an azo-based compound such as azobisisobutyronitrile and azobisdimethylvaleronitrile; an organic peroxide such as benzoyl peroxide and dicumyl peroxide; an inorganic peroxide such as potassium persulfate; a redox polymerization initiator such as cerium (IV) salt-alcohol-based, and the like.

Vinyl esters may be polymerized by known polymerization methods such as solution polymerization, suspension polymerization, bulk polymerization, and the like. Solution polymerization is preferred because of ease of operation. In addition, the method for polymerizing vinyl esters is preferably solution polymerization in alcohol, because the same solvent as the solvent for the saponification reaction that is subsequently carried out can be used. In the case of solution polymerization, the polymerization reaction temperature is preferably 30 °C or higher and may be 90 °C or lower.

The saponification reaction is performed by dissolving polyvinyl esters obtained by polymerization in alcohol to prepare an alcohol solution, and subjecting the ester in the molecule to a transesterification reaction (alcoholysis) with the solvent alcohol in the presence of an alkali catalyst or an acid catalyst.

Examples of the alcohol as a solvent for the saponification reaction include methanol, ethanol, propanol, butanol, and the like. From the viewpoint of ease of reaction and the like, it is preferable to use methanol. The concentration of polyvinyl ester in the alcohol solution may be, for example, 10 parts by mass or more and 80 parts by mass or less. The reaction temperature during the saponification reaction is preferably 10 to 70°C, more preferably 30 to 50°C. The saponification reaction time is preferably 10 minutes to 10 hours, more preferably 30 minutes to 3 hours.

Examples of the alkali catalyst that can be used include alkali metal hydroxides such as sodium hydroxide and potassium hydroxide, and alcoholates such as sodium methylate, sodium ethylate, and potassium methylate. As the acid catalyst, for example, an aqueous solution of an inorganic acid such as hydrochloric acid or sulfuric acid, or an organic acid such as p-toluenesulfonic acid can be used. It is preferable to use sodium hydroxide from the viewpoints of ease of reaction control, manufacturing cost, and the like. The amount of these catalysts used is preferably, for example, 0.1 to 100 mmol equivalent with respect to the vinyl ester monomer unit of the polyvinyl ester.

The degree of saponification of the polyvinyl alcohol-based polymer is not particularly limited, but from the viewpoint of water resistance and adhesive performance, it is preferably 95.0 mol% or more, more preferably 97.0 mol% or more, and even more preferably 99.0 mol% or more. The upper limit of the degree of saponification of the polyvinyl alcohol-based polymer is not particularly set, and it may be 100 mol%.

In this specification, the "degree of saponification" refers to a value calculated by measuring according to JIS K 6726-1994, "3.5 Degree of Saponification".

The method for saponifying the polyvinyl ester may be, for example, a belt saponification method, a kneader saponification method or the like, and the belt saponification method is preferable from the viewpoint of ease of production.

When the saponification reaction is carried out with sodium hydroxide, sodium acetate is produced as a by-product of the reaction. Since sodium acetate deteriorates the yellowing resistance of the polyvinyl alcohol-based polymer composition, it is preferable to reduce it as much as possible.

As a method for reducing sodium acetate in a polyvinyl alcohol-based polymer composition, in the saponification reaction, it can be achieved by reducing the amount of sodium hydroxide added and extending the reaction time, or by reducing the water content in the reaction system. However, a method of washing the polyvinyl alcohol-based polymer obtained after the saponification reaction with an alcohol such as methanol to wash away the sodium acetate is preferable because it is simple.

At this time, the amount of sodium acetate in the polyvinyl alcohol-based polymer composition is preferably 1.0 parts by mass or less, more preferably 0.7 parts by mass or less, and even more preferably 0.5 parts by mass or less, with respect to 100 parts by mass of the polyvinyl alcohol-based polymer, from the viewpoint of maintaining the yellowing resistance improvement effect when citric acid is added. There is no particular lower limit set for the amount of sodium acetate in the polyvinyl alcohol-based polymer composition. However, from the viewpoint of the cost of complete removal and the resulting effect, the amount of sodium acetate in the polyvinyl alcohol-based polymer composition is typically 0.01 parts by mass or more, more typically 0.1 parts by mass or more, and even more typically 0.5 parts by mass or more, with respect to 100 parts by mass of the polyvinyl alcohol-based polymer. The amount of sodium acetate in the polyvinyl alcohol-based polymer composition is measured by the dissolution conductivity method described in JIS K 6726-1994.

Further, from the viewpoint of suppressing blocking, the amount of methanol in the polyvinyl alcohol-based polymer composition is, for example, preferably 0.1 to 3.0 parts by mass, and more preferably 0.1 to 1.0 parts by mass, with respect to 100 parts by mass of the polyvinyl alcohol-based polymer. The amount of methanol can be adjusted by the drying time of the polyvinyl alcohol-based polymer. In addition, the amount of methanol is determined by an absolute calibration curve method using gas chromatography. First, a calibration curve is created using a mixture of methanol and water whose amount of methanol is known. Next, 1 g of the polyvinyl alcohol-based polymer composition is added to 49 mL of water and heated in an 80°C incubator to dissolve. After visually confirming the dissolution of the polyvinyl alcohol-based polymer composition, measurement is performed using gas chromatography (GC-9A manufactured by Shimadzu Corporation was used in the Examples), and the amount of methanol in the polyvinyl alcohol-based polymer composition is determined based on the prepared calibration curve.

Regarding the ratio (Y/X) of the mass fraction (Y) of the polyvinyl alcohol-based polymer having a particle size of 1000 $\mu$m or more to the mass fraction (X) of the polyvinyl alcohol-based polymer having a particle size of 500 $\mu$m or less, there is a tendency that the larger (Y/X) is, the more effective it is to suppress blocking. From this viewpoint, the lower limit of Y/X is preferably 0.3 or more, more preferably 0.5 or more, and even more preferably 1.0 or more. In addition, the smaller Y/X is, the easier it is to improve the adhesion performance. From this point of view, the upper limit of Y/X is 5.0 or less, preferably 4.0 or less, and still more preferably 3.0 or less. Therefore, the range of Y/X is preferably 0.3 to 5.0, more preferably 0.5 to 4.0, even more preferably 1.0 to 3.0, from the viewpoint of achieving both blocking suppression effect and adhesive performance. The particle size of the polyvinyl alcohol-based polymer can be adjusted by the grinding time and sieving in a grinding process. Blocking can be suppressed by adjusting the particle size of the polyvinyl alcohol-based polymer to fall within the above range.

The mass fraction of the polyvinyl alcohol-based polymer with a particle size of 1000 $\mu$m or more refers to the ratio of the polyvinyl alcohol-based polymer remaining on a sieve (the sieved product) based on the mass (mass of the sieved product / total mass of the polyvinyl alcohol-based polymer to be measured), when the polyvinyl alcohol-based polymer to be measured is sieved using a test sieve (nominal opening 1000 $\mu$m) as described in JIS Z 8801-1 :2006. In addition, the mass fraction of the polyvinyl alcohol-based polymer with a particle size of 500 $\mu$m or less refers to the ratio of the polyvinyl alcohol-based polymer that has passed through a sieve (the unsieved product) based on the mass (mass of the unsieved product / total mass of the polyvinyl alcohol-based polymer to be measured), when the polyvinyl alcohol-based polymer to be measured is sieved using a test sieve (nominal opening 500 $\mu$m) as described in JIS Z 8801-1 :2006.

The viscosity average degree of polymerization of the polyvinyl alcohol-based polymer may be, for example, 100 or more, for example, 700 or more, for example, 1000 or more, and is, for example, 10000 or less, 6000 or less, or 4000 or less.

In this specification, the "viscosity average degree of polymerization" is calculated by the following formula (1) from the intrinsic viscosity [η] (g/dL) measured at 30 °C with an Ostwald viscometer using ion-exchanged water as a solvent.

$$\log(P) = 1.613 \times \log([\eta] \times 10^4/8.29) \qquad \text{Formula (1)}$$

In one embodiment of the polyvinyl alcohol-based polymer composition according to the present invention, the total amount of the polyvinyl alcohol-based polymer and citric acid is 90% by mass or more, preferably 95% by mass or more, and for example, it can be 90 to 99% by mass.

According to one embodiment of the present invention, there is provided a binder for glass paper containing the polyvinyl alcohol-based polymer composition of the present invention. The binder for glass paper may be composed of the polyvinyl alcohol-based polymer composition of the present invention itself, or may be appropriately added with known additives. A glass paper is a type of nonwoven fabric made from short glass fibers (glass wool), and is manufactured by bonding the short glass fibers with a binder. Polyvinyl alcohol-based polymer is one of the typical binders. The polyvinyl alcohol-based polymer composition according to the present invention can be used as a primary binder that is used in the form of a slurry in which a polyvinyl alcohol-based polymer is swollen and dispersed in water, and as a secondary binder in which polyvinyl alcohol-based polymer is used as an aqueous solution.

The primary binder serves to bond the short glass fibers together with the short glass fibers by being strained into a sheet on a wire mesh and then heated in a dryer. The secondary binder exhibits the effect of improving adhesion strength by applying it to a sheet of short glass fibers bonded by the primary binder and heating and drying it. The polyvinyl alcohol-based polymer composition of the present invention can be used as both a primary binder and a secondary binder, and is particularly suitable for use as a secondary binder.

EXAMPLES

The present invention will be specifically described below with reference to Examples. It should be noted that the present invention is not limited to these Examples.

[Example 1]

A reactor equipped with a reflux condenser, a dropping funnel, and a stirrer was charged with 100 parts by mass of vinyl acetate, 28.2 parts by mass of methanol, and 0.03 parts by mass of azobisisobutyronitrile. Polymerization was carried out at the boiling point for 6.7 hours while stirring in a nitrogen stream. Next, unreacted vinyl acetate was removed to the outside of the polymerization system to obtain a methanol solution of polyvinyl acetate with a degree of polymerization of 2150 (solid content concentration: 54% by mass). The solid content concentration was measured from the change in mass by weighing about 3 g of the obtained methanol solution of polyvinyl acetate into an aluminum cup and then drying it at 150°C for 30 minutes.

To 100 parts by mass of the methanol solution of polyvinyl acetate obtained above, a sodium hydroxide solution (prepared such that sodium hydroxide was calculated as 20 mmol equivalent with respect to the vinyl acetate units of the polyvinyl acetate) was added. The saponification reaction was carried out at 40°C for 40 minutes. After the reaction was completed, the obtained wet cake was coarsely ground and acetic acid was added to stop the saponification reaction. After removing the reaction mother liquor by centrifugation, the mixture was washed with 50 parts by mass of methanol, and the methanol was removed by centrifugation again. Then, powdered polyvinyl alcohol (PVA) was obtained by drying at 120°C for 50 minutes in a gear oven. After that, it was ground with a grinder for 10 minutes.

For the obtained polyvinyl alcohol, the viscosity average degree of polymerization, the degree of saponification, the amount of sodium acetate with respect to 100 parts by mass of polyvinyl alcohol, the amount of methanol with respect to 100 parts by mass of polyvinyl alcohol, and the mass ratio of large particle size to small particle size (ratio of the mass fraction of polyvinyl alcohol-based polymer with a particle size of 1000 $\mu$m or more to the mass fraction of polyvinyl alcohol-based polymer with a particle size of 500 $\mu$m or less) were measured by the method described above. The viscosity average degree of polymerization was 1700, the degree of saponification was 99.3 mol%, the amount of sodium acetate was 0.5 parts by mass, the amount of methanol was 1.0 parts by mass, and the mass ratio of large particle size to small particle size was 2.0. The results are shown in Table 1.

<Yellowing resistance test>

To 100 parts by mass of the powdered polyvinyl alcohol obtained above, 3.0 parts by mass of powdered citric acid was added and mixed uniformly to obtain a polyvinyl alcohol-based polymer composition. Thereafter, a polyvinyl alcohol film having a thickness of about 100 $\mu$m was prepared using this polyvinyl alcohol-based polymer composition by a solution casting method. The film was cut into 50 mm squares and heat-treated at 150°C for 30 minutes. Also, a film prepared in the same manner was heat-treated at 200°C for 30 minutes.

The yellowness index of the film before and after heat treatment was measured by the following method.

The film having the thickness of about 100 $\mu$m was placed at 20°C and 60% RH for 24 hours for humidity control. XYZ in the XYZ color system was measured with a transmissive color difference meter (model ZE 2000 manufactured by NIPPON DENSHOKU INDUSTRIES Co., Ltd.), and the yellowness index (YI) was calculated.

$$\text{(Calculation formula: YI} = 100 * (1.28X-1.06Z) / Y)$$

The yellowness index was 0.5 (before heat treatment), 3.0 (after heat treatment at 150°C) and 25.4 (after heat treatment at 200°C), respectively. The results are shown in Table 1.

<Adhesion test>

Adhesion tests were conducted on the polyvinyl alcohol-based polymer composition prepared above according to the following procedure.

50 mL of pure water was weighed into a 100 mL disco cup, and 0.438 g of polyvinyl alcohol-based polymer composition was added little by little while stirring with a stirrer to swell the composition.

450 mL of pure water was measured into a mixer, 1.750 g of short glass fibers with a length of 6 mm were added little by little, and the mixture was lightly stirred with a Teflon (registered trademark) rod.

The slurry containing the swollen polyvinyl alcohol-based polymer was placed in a mixer and stirred for 2 minutes with the mixer.

The slurry liquid after stirring is poured into a Nutsche set with an 80 mesh Teflon mesh (manufactured by Shimadzu Corporation). After stirring lightly with a Teflon rod to make it uniform, the rubber stopper was removed so as not to tilt the Nutsche.

When the slurry liquid passing through the Teflon mesh stops, tweezers were used to pull up the Teflon mesh together with the residue on the Teflon mesh, and they were placed on a recording board. A 10 mesh Teflon mesh (manufactured by Shimadzu Corporation) and an industrial filter paper were placed on the top of the residue in this order. Turning them upside down, the 80 mesh Teflon screen was removed, and a 10 mesh Teflon mesh and an industrial filter paper were placed on the top of the residue in this order.

On the laminate thus prepared, a pressing roll was reciprocated five times, and the upper and lower industrial filter papers were replaced with different industrial filter papers.

Further, 0.49 MPa was applied for 5 minutes using a press, and after taking out, the industrial filter papers were replaced with other industrial filter papers.

Pressing with an electric heat press at 110°C for 2 minutes, taking it out once to release the pressure, and holding it in the atmosphere for 10 minutes to evaporate moisture. Thereafter, the laminate was placed in an electric heat press at 110°C for 1 minute and taken out. Thereafter, the Teflon mesh and the industrial filter papers were removed.

The glass paper prepared in this way was cut into 20 mm × 80 mm. Using a tensile tester (manufactured by Shimadzu Corporation, model AG-X 5 kN), a tensile test was performed at a tensile speed of 1 mm/min at 20°C to evaluate the adhesion strength. As a result, the adhesion strength was 13 N. The results are shown in Table 1.

<Water resistance test>

The initial mass of the polyvinyl alcohol-based polymer composition prepared above was measured. Next, after being immersed in water at 20°C for 5 minutes, it was filtered using a Buchner funnel equipped with a No. 5A filter paper, and the mass of the polyvinyl alcohol-based polymer composition in a swollen state was measured. Water resistance was evaluated by calculating the degree of swelling using the following formula. As a result, the degree of swelling was 3%. The results are shown in Table 1.

$$\text{Degree of swelling (\%)} = [\text{mass of filtered polyvinyl alcohol-based polymer composition in swollen state}] / [\text{initial mass of polyvinyl-based alcohol polymer composition}] \times 100$$

<Blocking test>

30 g of the polyvinyl alcohol-based polymer composition was heat-sealed hermetically with a polyethylene film to a size of 95 mm × 50 mm to obtain a sample. A load of 210 g/cm$^2$ was applied to the sample, and the blocking condition was evaluated after being held at 40°C for 12 hours and then at -20°C for 12 hours. If the blocked mass was less than 5% with respect to 30 g of the polyvinyl alcohol-based polymer composition, it was rated as double circle, if it was 5 to 30%, it was rated as circle, and if it exceeded 30%, it was rated as triangle. As a result, the evaluation of the blocking test was double circle. The results are shown in Table 1. Here, the blocked mass was calculated using the following formula by taking out the polyvinyl alcohol-based polymer composition (30 g) from the sample prepared above, and weighing the mass A (g) of the polyvinyl alcohol-based polymer composition remaining on a sieve (the sieved product) when sieving using a test sieve (nominal opening 2 mm) described in JIS Z 8801-1: 2006.

$$\text{Blocked mass (\%)} = (A/30) \times 100$$

[Example 2]

A polyvinyl alcohol-based polymer composition was obtained in the same manner as in Example 1 except that the amount of citric acid was changed to 1.0 parts by mass, and various tests were conducted. The yellowness index was 0.5 (before heat treatment), 5.2 (after heat treatment at 150°C) and 76.4 (after heat treatment at 200°C), respectively. Further, the adhesion strength was 12 N, the degree of swelling was 4%, and the blocking test evaluation was double circle. The results are shown in Table 1.

[Example 3]

A polyvinyl alcohol-based polymer composition was obtained in the same manner as in Example 1 except that the amount of citric acid was changed to 0.5 parts by mass, and various tests were conducted. The yellowness index was 0.5 (before heat treatment), 6.5 (after heat treatment at 150°C) and 112 (after heat treatment at 200°C), respectively. Further, the adhesion strength was 13 N, the degree of swelling was 5%, and the blocking test evaluation was double circle. The results are shown in Table 1.

[Example 4]

A polyvinyl alcohol-based polymer composition was obtained in the same manner as in Example 1 except that the amount of citric acid was changed to 0.1 parts by mass, and various tests were conducted. The yellowness index was 0.5 (before heat treatment), 7.1 (after heat treatment at 150°C) and 140 (after heat treatment at 200°C), respectively. Further, the adhesion strength was 14 N, the degree of swelling was 4%, and the blocking test evaluation was double circle. The results are shown in Table 1.

[Example 5]

A polyvinyl alcohol-based polymer composition was obtained in the same manner as in Example 1 except that the amount of citric acid was changed to 11 parts by mass, and various tests were conducted. The yellowness index was 0.5 (before heat treatment), 3.1 (after heat treatment at 150°C) and 26.3 (after heat treatment at 200°C), respectively. Further, the adhesion strength was 7 N, the degree of swelling was 3%, and the blocking test evaluation was double circle. The results are shown in Table 1.

[Example 6]

A polyvinyl alcohol-based polymer composition was obtained in the same manner as in Example 1 except that the amount of methanol for washing was changed to 20 parts by mass, and the amount of sodium acetate was changed to 0.7 parts by mass, and various tests were conducted. The yellowness index was 0.7 (before heat treatment), 3.5 (after heat treatment at 150°C) and 28.9 (after heat treatment at 200°C), respectively. Further, the adhesion strength was 13 N, the degree of swelling was 3%, and the blocking test evaluation was double circle. The results are shown in Table 1.

[Example 7]

A polyvinyl alcohol-based polymer composition was obtained in the same manner as in Example 1 except that the amount of methanol for washing was changed to 0 parts by mass, and the amount of sodium acetate was changed to 1.0 parts by mass, and various tests were conducted. The yellowness index was 0.7 (before heat treatment), 4.6 (after heat treatment at 150°C) and 30.5 (after heat treatment at 200°C), respectively. Further, the adhesion strength was 13 N, the degree of swelling was 5%, and the blocking test evaluation was double circle. The results are shown in Table 1.

[Example 8]

A polyvinyl alcohol-based polymer composition was obtained in the same manner as in Example 1 except that the amount of sodium hydroxide added was changed to 19 mmol, and the degree of saponification was changed to 95.0 mol%, and various tests were conducted. The yellowness index was 0.5 (before heat treatment), 3.5 (after heat treatment at 150°C) and 27.8 (after heat treatment at 200°C), respectively. Further, the adhesion strength was 10 N, the degree of swelling was 8%, and the blocking test evaluation was double circle. The results are shown in Table 1.

[Example 9]

A polyvinyl alcohol-based polymer composition was obtained in the same manner as in Example 1 except that the amount of sodium hydroxide added was changed to 18.5 mmol, and the degree of saponification was changed to 93.0 mol%, and various tests were conducted. The yellowness index was 0.5 (before heat treatment), 3.2 (after heat treatment at 150°C) and 26.1 (after heat treatment at 200°C), respectively. Further, the adhesion strength was 8 N, the degree of swelling was 12%, and the blocking test evaluation was double circle. The results are shown in Table 1.

[Example 10]

A polyvinyl alcohol-based polymer composition was obtained in the same manner as in Example 1 except that the drying time was changed to 40 minutes and the amount of methanol was changed to 3.0 parts by mass, and various tests were conducted. The yellowness index was 0.5 (before heat treatment), 3.1 (after heat treatment at 150°C) and 26.2 (after heat treatment at 200°C), respectively. Further, the adhesion strength was 13 N, the degree of swelling was 4%, and the blocking test evaluation was circle. The results are shown in Table 1.

[Example 11]

A polyvinyl alcohol-based polymer composition was obtained in the same manner as in Example 1 except that the grinding time was set to 15 minutes, and the mass ratio of large particles to small particles was changed to 0.2, and various tests were conducted. The yellowness index was 0.5 (before heat treatment), 3.4 (after heat treatment at 150°C) and 26.6 (after heat treatment at 200°C), respectively. Further, the adhesion strength was 12 N, the degree of swelling was 4%, and the blocking test evaluation was circle. The results are shown in Table 1.

[Example 12]

A polyvinyl alcohol polymer composition was obtained in the same manner as in Example 1 except that the grinding time was set to 5 minutes, and the mass ratio of large particles to small particles was changed to 4.0, and various tests were conducted. The yellowness index was 0.5 (before heat treatment), 3.2 (after heat treatment at 150°C) and 24.1 (after heat treatment at 200°C), respectively. Further, the adhesion strength was 8 N, the degree of swelling was 3%, and the blocking test evaluation was double circle. The results are shown in Table 1.

[Comparative Example 1]

A polyvinyl alcohol-based polymer composition was obtained in the same manner as in Example 1 except that citric acid was not added, and various tests were conducted. The yellowness index was 0.5 (before heat treatment), 7.6 (after heat treatment at 150°C) and 171 (after heat treatment at 200°C), respectively. Further, the adhesion strength was 13 N, the degree of swelling was 4%, and the blocking test evaluation was double circle. The results are shown in Table 1.

Table 1

| | | | Example | | | | | | | | | | | | Comparative Example |
|---|---|---|---|---|---|---|---|---|---|---|---|---|---|---|---|
| No. | | | 1 | 2 | 3 | 4 | 5 | 6 | 7 | 8 | 9 | 10 | 11 | 12 | 1 |
| PVA | Viscosity average degree of polymerization | | 1,700 | 1,700 | 1,700 | 1,700 | 1,700 | 1,700 | 1,700 | 1,700 | 1,700 | 1,700 | 1,700 | 1,700 | 1,700 |
| | Saponification degree | [mol%] | 99.3 | 99.3 | 99.3 | 99.3 | 99.3 | 99.3 | 99.3 | 95.0 | 93.0 | 99.3 | 99.3 | 99.3 | 99.3 |
| | sodium acetate | [parts by mass] | 0.5 | 0.5 | 0.5 | 0.5 | 0.5 | 0.7 | 1.0 | 0.5 | 0.5 | 0.5 | 0.5 | 0.5 | 0.5 |
| | methanol | [parts by mass] | 1.0 | 1.0 | 1.0 | 1.0 | 1.0 | 1.0 | 1.0 | 1.0 | 1.0 | 3.0 | 1.0 | 1.0 | 1.0 |
| | Mass ratio of large particle size to small particle | size (Y/X) | 2.0 | 2.0 | 2.0 | 2.0 | 2.0 | 2.0 | 2.0 | 2.0 | 2.0 | 2.0 | 0.2 | 4.0 | 2.0 |
| Forumating ratio of PVA composition | PVA | [parts by mass] | 100 | 100 | 100 | 100 | 100 | 100 | 100 | 100 | 100 | 100 | 100 | 100 | 100 |
| | Citric acid | [parts by mass] | 3.0 | 1.0 | 0.5 | 0.1 | 11 | 3.0 | 3.0 | 3.0 | 3.0 | 3.0 | 3.0 | 3.0 | 0.0 |
| Yellowing resistance | | | | | | | | | | | | | | | |

(continued)

| | | Example | | | | | | | | | | | | Comparative Example |
|---|---|---|---|---|---|---|---|---|---|---|---|---|---|---|
| No. | | 1 | 2 | 3 | 4 | 5 | 6 | 7 | 8 | 9 | 10 | 11 | 12 | 1 |
| | Yellowness Index before test | 0.5 | 0.5 | 0.5 | 0.5 | 0.5 | 0.7 | 0.7 | 0.5 | 0.5 | 0.5 | 0.5 | 0.5 | 0.5 |
| | Yellowness Index after test (150 °C × 30min) | 3.0 | 5.2 | 6.5 | 7.1 | 3.1 | 3.5 | 4.6 | 3.5 | 3.2 | 3.1 | 3.4 | 3.2 | 7.6 |
| | Yellowness Index after test (200 °C × 30min) | 25.4 | 76.4 | 112 | 140 | 26.3 | 28.9 | 30.5 | 27.8 | 26.1 | 26.2 | 26.6 | 24.1 | 171 |
| Adhesion test Adhesion strength [N] | | 13 | 12 | 13 | 14 | 7 | 13 | 13 | 10 | 8 | 13 | 12 | 8 | 13 |
| Water resistance test Degree of swelling [%] | | 3 | 4 | 5 | 4 | 3 | 3 | 5 | 8 | 12 | 4 | 4 | 3 | 4 |
| Blocking test | | ◎ | ◎ | ◎ | ◎ | ◎ | ◎ | ◎ | ◎ | ◎ | ○ | ○ | ◎ | ◎ |

In Comparative Example 1, since citric acid was not added to polyvinyl alcohol, the yellowing resistance upon heating was low. On the other hand, in Examples 1 to 12, by adding an appropriate amount of citric acid to polyvinyl alcohol, the yellowing resistance during heating, especially when heated at 200°C, was significantly improved compared to Comparative Example 1. Therefore, the polyvinyl alcohol-based polymer compositions according to Examples 1 to 12 are extremely advantageous industrially.

**Claims**

1. A polyvinyl alcohol-based polymer composition, comprising a polyvinyl alcohol-based polymer; and citric acid.

2. The polyvinyl alcohol-based polymer composition according to claim 1, wherein an amount of the citric acid is 0.01 to 10 parts by mass with respect to 100 parts by mass of the polyvinyl alcohol-based polymer.

3. The polyvinyl alcohol-based polymer composition according to claim 1 or 2, wherein an amount of sodium acetate is 1.0 parts by mass or less with respect to 100 parts by mass of the polyvinyl alcohol-based polymer.

4. The polyvinyl alcohol-based polymer composition according to any one of claims 1 to 3, wherein the polyvinyl alcohol-based polymer has a degree of saponification of 95.0 mol% or more.

5. The polyvinyl alcohol-based polymer composition according to any one of claims 1 to 4, wherein an amount of methanol is 0.1 to 3.0 parts by mass with respect to 100 parts by mass of the polyvinyl alcohol-based polymer.

6. The polyvinyl alcohol-based polymer composition according to any one of claims 1 to 5, wherein a ratio of a mass fraction of the polyvinyl alcohol-based polymer having a particle size of 1000 $\mu$m or more to a mass fraction of the polyvinyl alcohol-based polymer having a particle size of 500 $\mu$m or less is 0.3 to 5.0.

7. A binder for glass paper, comprising the polyvinyl alcohol polymer-based composition according to any one of claims 1 to 6.

## INTERNATIONAL SEARCH REPORT

International application No.

**PCT/JP2022/020586**

### A. CLASSIFICATION OF SUBJECT MATTER

*C08F 8/12*(2006.01)i; *C08F 16/06*(2006.01)i; *C08K 5/092*(2006.01)i; *C08L 29/04*(2006.01)i
FI: C08L29/04 A; C08K5/092; C08F8/12; C08F16/06

According to International Patent Classification (IPC) or to both national classification and IPC

### B. FIELDS SEARCHED

Minimum documentation searched (classification system followed by classification symbols)

C08F8/12; C08F16/06; C08K5/092; C08L29/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-199740 A (KURARAY CO., LTD.) 27 July 1999 (1999-07-27)<br>claims 1, 2, paragraphs [0003], [0030], [0037], example 4 | 1-2, 4, 6 |
| Y | | 3, 5, 7 |
| X | JP 11-222546 A (KURARAY CO., LTD.) 17 August 1999 (1999-08-17)<br>claims 1-5, paragraphs [0011], [0013], example 1 | 1-2, 4, 6 |
| Y | | 3, 5, 7 |
| X | JP 11-93075 A (KURARAY CO., LTD.) 06 April 1999 (1999-04-06)<br>claims 1, 6, paragraphs [0003], [0007], table 1, example 1 | 1-2, 4, 6 |
| Y | | 3, 5, 7 |
| Y | WO 2014/192773 A1 (KURARAY CO., LTD.) 04 December 2014 (2014-12-04)<br>claim 1, paragraphs [0007], [0094] | 3 |
| Y | WO 2020/050255 A1 (KURARAY CO., LTD.) 12 March 2020 (2020-03-12)<br>claims 1, 3, paragraph [0010] | 5 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/020586** |

**C.     DOCUMENTS CONSIDERED TO BE RELEVANT**

| Category* | Citation of document, with indication, where appropriate, of the relevant passages | Relevant to claim No. |
| --- | --- | --- |
| Y | WO 2019/012581 A1 (DENKA CO., LTD.) 17 January 2019 (2019-01-17)<br>claims 1, 6, paragraph [0002] | 7 |

Form PCT/ISA/210 (second sheet) (January 2015)

**INTERNATIONAL SEARCH REPORT**
**Information on patent family members**

International application No.

**PCT/JP2022/020586**

| Patent document cited in search report | | | Publication date (day/month/year) | Patent family member(s) | Publication date (day/month/year) |
|---|---|---|---|---|---|
| JP | 11-199740 | A | 27 July 1999 | (Family: none) | |
| JP | 11-222546 | A | 17 August 1999 | US 6166117 A claims 1-12, column 3, lines 41-46, column 3, line 66 to column 4, line 13, example 1 EP 884352 A1 | |
| JP | 11-93075 | A | 06 April 1999 | (Family: none) | |
| WO | 2014/192773 | A1 | 04 December 2014 | TW 201502142 A | |
| WO | 2020/050255 | A1 | 12 March 2020 | US 2021/0309770 A1 claims 1, 3, paragraph [0014] EP 3848400 A1 CN 112638953 A TW 202019982 A | |
| WO | 2019/012581 | A1 | 17 January 2019 | US 2020/0157289 A1 claims 1, 6, paragraph [0002] EP 3653654 A1 | |

Form PCT/ISA/210 (patent family annex) (January 2015)

**REFERENCES CITED IN THE DESCRIPTION**

**Patent documents cited in the description**

- US 20170044407

- WO 2019012581 A